# EUROPEAN PATENT APPLICATION

(11) **EP 1 109 114 A1**
(43) Date of publication of application: **20.06.2001**
(21) Application number: 99124938.4
(22) Date of filing: 14.12.1999
(51) Int. Cl.: G06F 17/30

(54) **Compound view onto data of a database**

(71) Applicant: SUN MICROSYSTEMS, INC., Palo Alto, California 94303 (US)
(72) Inventor: Breuer, Matthias, 21220 Seevetal (DE); Schönheit, Frank, 22047 Hamburg (DE)
(74) Representative: Betten & Resch

(57) **Abstract**

The invention relates to a method of accessing data of a database, said method comprising: providing a form view onto data of said database, and simultaneously providing a table view onto data accessed by said form view.

## Description

### FIELD OF THE INVENTION

The present invention relates to the view a user has onto a database, and in particular, it relates to a compound view onto a database provided to the user.

### DESCRIPTION OF THE RELATED ART

Databases are common tools on nowadays' computers. Databases can store data which are of interest to a user, and they provide the user with sophisticated tools to query, modify, and display the data stored in a database.

One type of commonly used databases are so-called relational databases, where data are stored in tables which are arranged in columns and rows. One row of such a table commonly is referred to as dataset. A dataset forms a piece of data of its own and is organized in individual data fields, which somehow inherently belong together in the sense that each of the data fields, or better the content of each of the data fields, describes one certain aspect of the dataset.

If for example a database is used to collect data on films or movies, then one such dataset typically would describe a certain movie, the individual fields of such a dataset would describe different attributes of such a movie, like the director, the genre (comedy, action, etc.), the title, the production year, and so on. The database would then typically consist of several such datasets or records which respectively contain information about individual films.

It is known to access the data stored in such a database in two different manners, one being a table view onto the table data, the other one being a so-called form view.

In a table view onto the data, the user may enter a certain query by defining certain search conditions (e.g.: select all films of the year 1994), and as an output then there will be displayed a table where all the datasets are listed which contain data about movies having been produced in 1994.

A different view onto a data of a database is the so-called form view. There is provided a form containing several fields where data can be inserted, each field corresponding to a column of the database table and being labelled by a corresponding title. For example, one such field may refer to the title of a film (labelled "Title"), another one may refer to its director (labelled "Director"), the year of its production, and so on.

When using the form view onto the data of a database, there is displayed a form where the fields of the form are filled by the corresponding contents of the data fields of a dataset of the table of the database accessed by the form view. Such a form view displays only a single record or data set of a database table, however, usually there are provided arrow buttons enabling the user to travel through the datasets accessed by the form view.

While the form view onto the data of a database certainly has its advantages when compared with the table view just because it is very easy to use and easy to overlook, it nevertheless has the drawback that only a single dataset or data record can be viewed at a time.

There is therefore a need for improving the database systems available so far with respect to the view they provide to the user onto the data of the database.

### SUMMARY OF THE INVENTION

According to an aspect of the present invention, the user is provided with a table view and a form view onto the data of a database at the same time. This "compound view" allows the user to take advantage of the form view being very easy to use, while at the same time several records are displayed to the user in a table view enabling him to have a look at several datasets at the same time.

By providing the user with a synchronous display of a table view and a form view onto the data source of a database, the user can for example in the table view quickly amend any dataset surrounding the dataset displayed in the form view, without needing to jump through form views always showing only one record at a time. By both view being synchronous, any amendment in one of them also readily affects the other one.

Preferably only one table view onto one (logical) data source is displayed if the form view consists of more than one (logical) forms, which means it uses more than one data source. In this case the user can then by setting the cursor to the other (not displayed) logical form adapt the table view also to this data source.

Preferably the user is in both views provided with options for editing and/or going through the datasets to make use of the advantages of a form view and a table view onto database data at the same time.

Further features and advantages of the present invention will become more apparent from the following detailed description of the preferred embodiments explaining the present invention in connection with the accompanying drawings.

### BRIEF DESCRIPTION OF THE DRAWINGS

Fig. 1 shows a block diagram of a computer system which can be used in connection with a preferred embodiment of the present invention.

Fig. 2 schematically shows the configuration of a database.

Fig. 3 schematically shows a table view onto a database.

Fig. 4 schematically shows a form view onto a database.

Fig. 5 schematically shows a compound view onto a database in accordance with a preferred embodiment of the present invention.

Fig. 6 schematically shows another compound view onto a database in accordance with a preferred embodiment of the present invention.

Fig. 7 schematically shows another compound view onto a database in accordance with a preferred embodiment of the present invention.

### DETAILED DESCRIPTION OF THE PREFERRED EMBODIMENTS

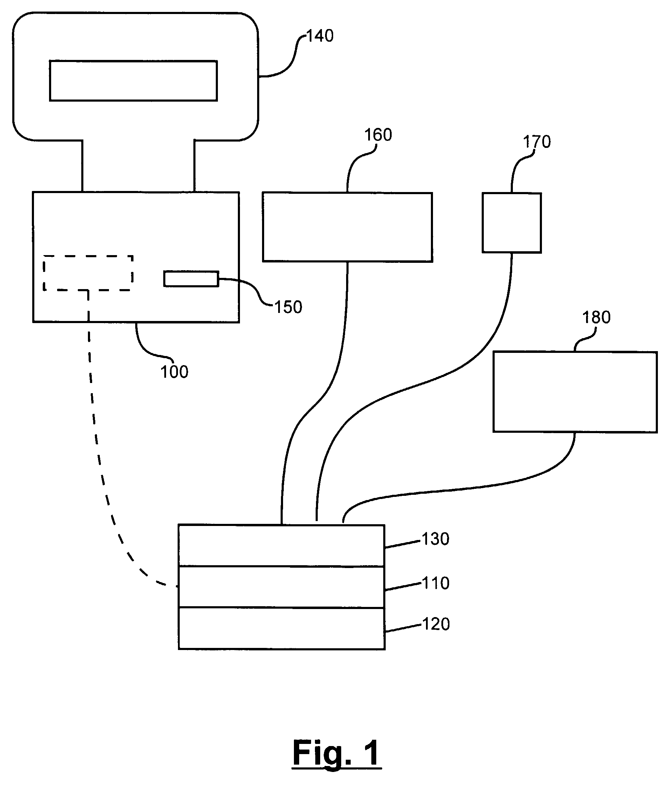

Fig. 1 schematically shows the configuration of a computer system to be used in connection with a preferred embodiment of the present invention. The computer 100 contains a CPU 110, a memory 120, and an I/O-unit 130. The computer 100 is capable of executing programs by carrying out computer instructions through CPU 110 which the CPU fetched from memory 120 and which may have been stored in a storage device 150 such as a CD-ROM or a floppy disk. The I/O-unit 130 is connected to a keyboard 160 and a mouse 170 to enable a user to input data to the computer, and it is further connected to a printer 180 to output documents as hardcopies. Computer 100 is further connected to a display unit 140 such as a monitor.

Those skilled in the art will readily recognize that the foregoing combination is just an illustrative example and not to be understood as limiting the features and advantages of the present invention as outlined in the following.

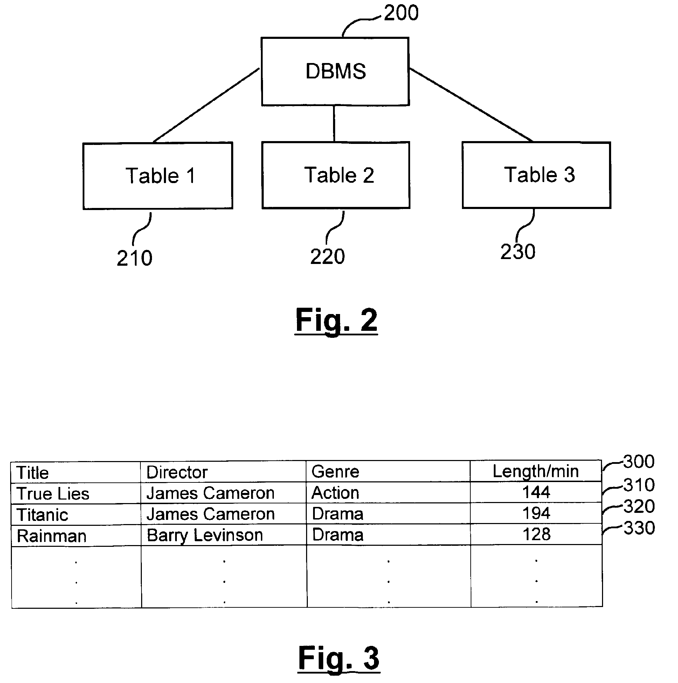

Fig. 2 schematically shows the configuration of a database consisting of a database management system 200 and several tables 210, 220, and 230 in which data are stored arranged in columns and rows. The DBMS 200 is used to retrieve, query, or edit the data stored in the tables, and to output the result of for example a query to the user.

The result of such a query is exemplarily shown in Fig. 3 in a table view. The rows 310, 320, 330 form individual datasets, the columns of table 300 consist of the fields of the individual datasets.

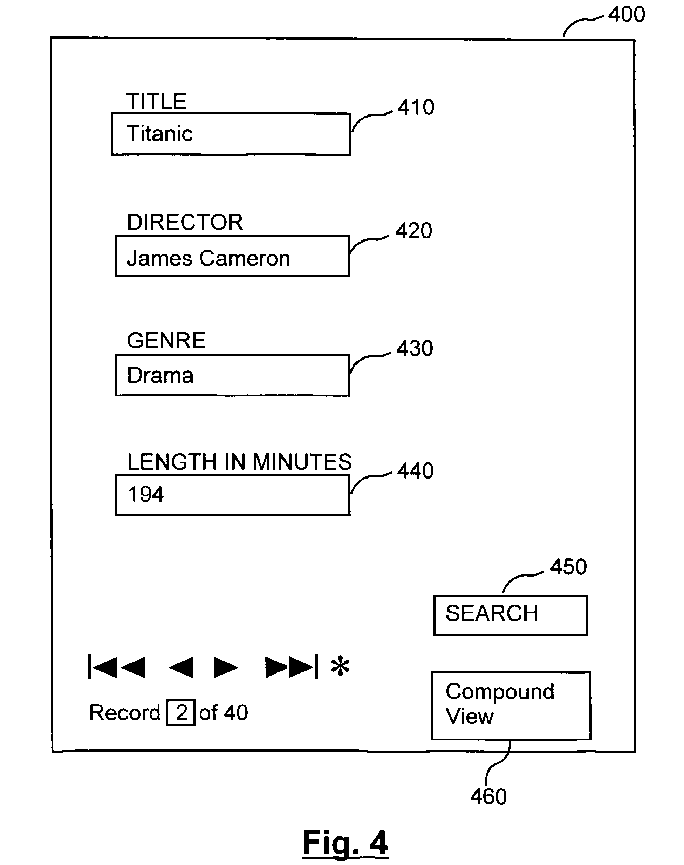

A different view onto the data of a database (which may also be referred to as a "source") is shown in Fig. 4 as a form view. The form shown in Fig. 4 contains several fields 410, 420, 430, 440, each of the fields corresponding to a data field of a dataset or to a column of a data table.

The form shown in Fig. 4 displays the second dataset 320 shown in Fig. 3. At the left-hand bottom of the window 400 there is a field indicating that data record No. 2 of 40 records in a total is displayed. With the arrow buttons above this indication the user can navigate through the datasets displayed in the form view.

The form view may just be a simple view onto a table of a database, in this case the user can using the arrow buttons travel through the datasets of the database table. It may, however, also be used as a filter mask to carry out a search on the contents of a database table. In such a case there is provided a search button 450 so that the user can carry out a search based on the conditions which have been entered into fields 410 to 440. For that purpose those fields may also be provided with pull-down menus so that the user can select possible entries.

It is to be understood, however, that form view 400 whether it being just a view onto a database table or a filter mask for searching a database is just for exemplary purposes used herein. In both cases the form view is provided with a button 460 which enables the user to select a compound view simultaneously providing the user with a form view and a table view onto the data of the database.

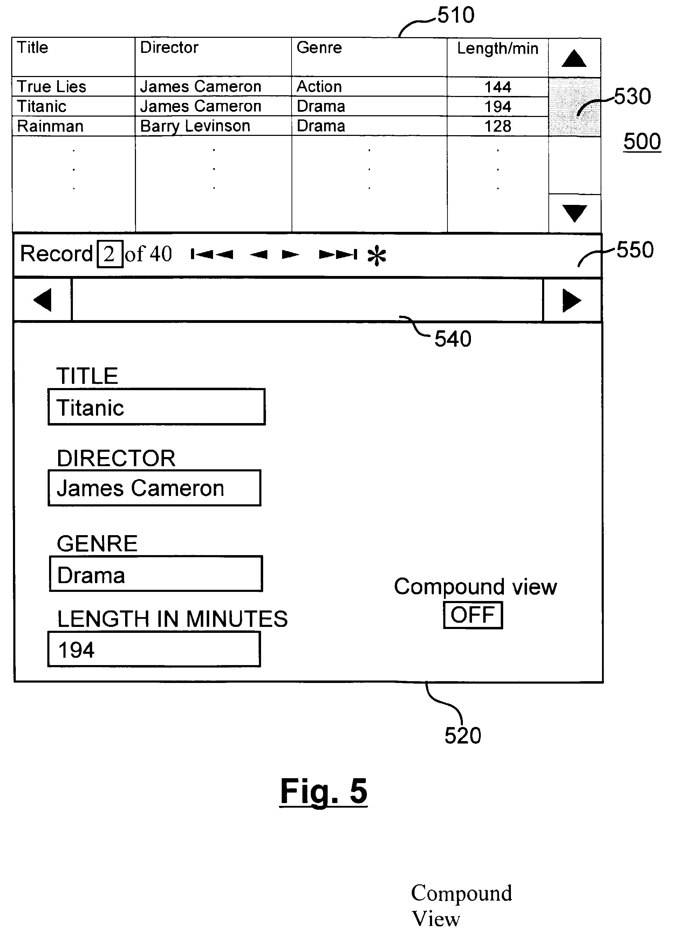

Such a compound view is schematically shown in Fig. 5.

Compound window 500 shown in Fig. 5 essentially is a combination of the windows shown in Figs. 3 and 4. It should, however, be noted that the compound window of Fig. 5 uses in its upper part 510 (the table view) and in its lower part 520 (the form view) the same data source. The dataset displayed in form view 520 can also be found in table view 510, however, there are just additional datasets displayed in table view 510.

For navigating through the datasets displayed in table view 510 there are provided scroll bars 530 and 540, in case of the number of datasets displayed in table view 510 exceeding the size of the table view window.

Toolbar 550 provides the user with several options to navigate through the datasets by well-known arrow buttons, furthermore there is provided a button to insert a new (empty) dataset which then may be edited and filled in.

On the left-hand side of toolbar 550 the user is provided with a field displaying the (total) number of datasets as well as the number of the one actually displayed.

Form view 520 and table view 510 shown in Fig. 5 are synchronous and show no difference with respect to the data shown therein. For each field of form view 520 there is a corresponding column in table view 510. Travelling through the data/datasets or changing/deleting data is possible in both of them by using the arrow buttons of toolbar 550.

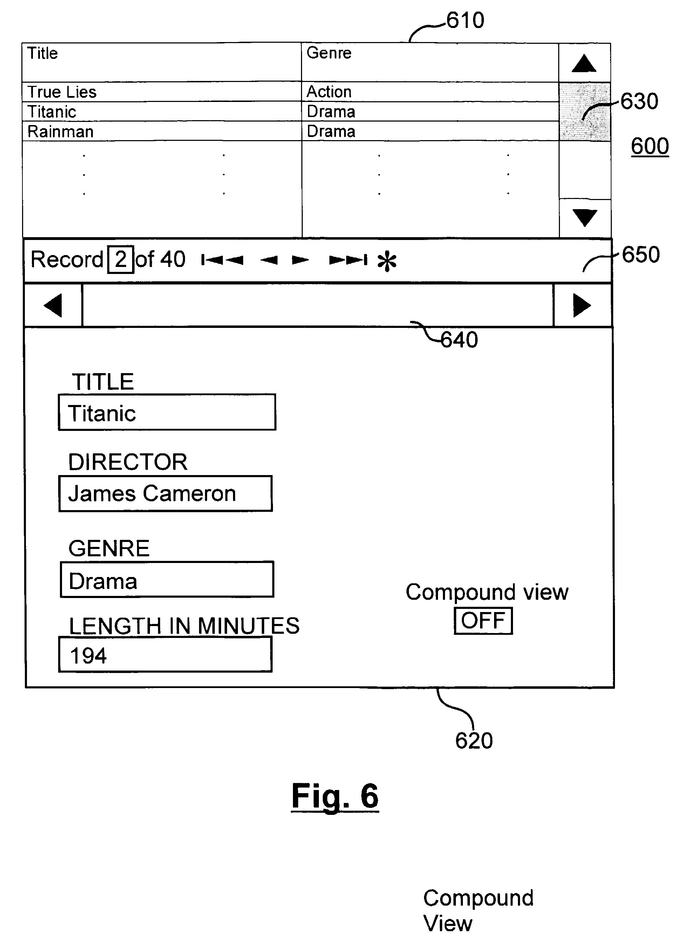

Form view 520 and table view 510 both relate to the same data source. If form view would access more than one data tables (more than one "logical forms"), then table view 510 would only display one of the corresponding tables. The user would then be able by means of the cursor to switch between the tables displayed in the table view 510. Setting the cursor to another (logical) form the table view would adapt its content. Figure 6 exemplarily shows such a case where one data table contains title and genre of a film, this being the table displayed in the compound view shown in Figure 6. The other (not displayed) table used as a source of the form contains the information regarding the director and the length of the films. If the user then clicks with the mouse on either the field director or length shown in the form view, then the table view would change to show the table containing the columns "director" and "genre".

It may also be possible that if the form view uses two different data sources (such as two different data tables) that then two table views corresponding to the two different data sources are displayed. In this case there may for example one table view be displayed above the form view window, the other table view may be displayed below the form view window.

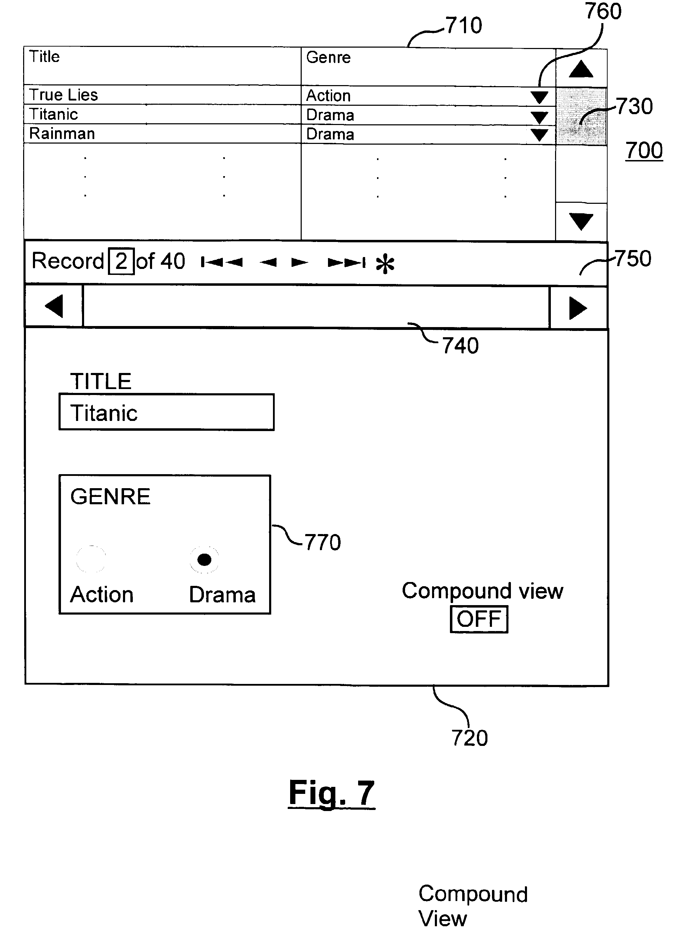

Figure 7 exemplarily shows a case where the "genre" selection is implemented in the form view 720 as radio button which means that the user can choose one among several options. In the table view 710 the column "genre" shows the option which corresponds to a certain dataset. If the user pushes arrow button 760, then a corresponding list box would be created in a known manner which would list the labels of the radio buttons (the possible options).

Those skilled in the art will readily understand that the steps and actions taken in connection with the description of the present invention hereinbefore represent actions performed by the CPU of a computer in accordance with computer instructions provided by a computer program. Therefore the present invention may be implemented by a computer program causing the CPU of a computer to carry out instructions representing the individual steps or actions as described hereinbefore. The computer instructions can also be stored on a computer-readable medium, or they can be embodied in any computer-readable medium such as any communications link, like a transmission link to a LAN, a link to the internet, or the like.

The invention can be implemented by a computer program comprising computer program code or application code. Application code or computer program code may be embodied in any form of a computer program product. A computer program product comprises a medium configured to store or transport computer-readable code, or in which computer-readable code may be embedded. Some examples of computer program products are CD-ROM disks, ROM cards, floppy disks, magnetic tapes, computer hard drives, servers on a network, and carrier waves. The computer program product may also comprise signals which do not use carrier waves, such as digital signals transmitted over a network (including the internet) without the use of a carrier wave. The computer program product may then be implemented as any transmission link, such as a connection to the internet, a LAN, a WAN, a public switched telephone network, or the like.

Moreover, the invention may be implemented in a client-server architecture, which means that some or all parts of a computer program are running on a server, and the remaining parts are running on a client. Through access to the server, the client may then in cooperation with the server implement a computer program embodying an implementation of the present invention.

The invention may further be implemented by a computer which is programmed such that it carries out a method as explained hereinbefore. Such a computer may be realized either by being programmed through a sequence of program instructions to carry out such a method, or it may be configured by dedicated hardware such that it carries out a method explained hereinabove.

While the present invention has been described in connection with preferred embodiments thereof, other embodiments will be apparent to those skilled in the art from consideration of the specification and practice of the invention as disclosed herein. It is intended that the specification and examples be considered as exemplary only, without limiting the true spirit and scope of the present invention.

## Claims

**1.** A method of enabling a user accessing data of a database, said method comprising:
providing an information signal for displaying a form view onto data of said database, and
simultaneously displaying a table view onto data accessed by said form view.

**2.** The method of claim 1, further comprinsing:
generating a screen display based on said information signal.

**3.** The method of claim 1, wherein said table view and said form view take the form of a compound window.

**4.** The method of claim 1, wherein said information signal is further characterized by
enabling or representing the displaying of several records simultaneously in said table view.

**5.** The method of claim 1, further comprising:
receiving an input from said user; and
generating in response to said user input an information signal for displaying in said table view the data source selected by the user, if more than one data sources are accessed by said form view.

**6.** The method of claim 1, further comprising:
generating an information signal for displaying one column in said table view for each data field contained in said form view.

**7.** The method of claim 1, further comprising:
for each radio button contained in said form view, generating an information signal for displaying a list box listing the labels of the radio buttons in said table view.

**8.** The method of claim 1, further comprising:
generating in response to an input received from said user a modified information signal for providing the user with the capability of editing data and/or travelling through data in both the table view and the form view.

**9.** A software tool for enabling a user to access data of a database, said method comprising:
a portion for providing an information signal for displaying a form view onto data of said database, and
a portion for simultaneously displaying a table view onto data accessed by said form view.

**10.** The software tool of claim 9, further comprinsing:
a portion for generating a screen display based on said information signal.

**11.** The software tool of claim 9, wherein said table view and said form view are in the form of a compound window.

**12.** The software tool of claim 9, wherein said information signal is further characterized by
enabling or representing the displaying of several records simultaneously in said table view.

**13.** The software tool of claim 9, further comprising:
a portion for receiving an input from said user; and
a portion for generating in response to said user input an information signal for displaying in said table view the data source selected by the user, if more than one data sources are accessed by said form view.

**14.** The software tool of claim 9, further comprising:
generating an information signal for displaying one column in said table view for each data field contained in said form view.

**15.** The software tool of claim 9,, further comprising:
a portion for generating for each radio button contained in said form view an information signal for displaying a list box listing the labels of the radio buttons in said table view.

**16.** The software tool of claim 9,, further comprising:
generating in response to an input received from said user a modified information signal for providing the user with the capability of editing data and/or travelling through data in both the table view and the form view.

**15.** A computer program product comprising computer program code for enabling a user accessing data of a database, said computer program code comprising:
a computer program code portion for providing an information signal for displaying a form view onto data of said database, and
for simultaneously displaying a table view onto data accessed by said form view.

**16.** The computer program product of claim 15, further comprinsing:
a computer program code portion for generating a screen display based on said information signal.

**17.** The computer program product of claim 15, wherein said table view and said form view take the form of a compound window.

**18.** A computer program comprising computer program code for enabling a user accessing data of a database, said computer program code comprising:
a computer program code portion for providing an information signal for displaying a form view onto data of said database, and
for simultaneously displaying a table view onto data accessed by said form view.

**19.** The computer program of claim 18, wherein said table view and said form view take the form of a compound window.

**20.** A computer programmed such that it is capable of carrying out a method of enabling a user accessing data of a database, said method comprising:
providing an information signal for displaying a form view onto data of said database, and
simultaneously displaying a table view onto data accessed by said form view.
